# FASCICULE DE BREVET EUROPEEN

(11) **EP 0 881 418 B1**
(45) Date de publication et mention de la délivrance du brevet: **29.01.2003**
(21) Numéro de dépôt: 98401112.2
(22) Date de dépôt: 07.05.1998
(51) Int. Cl.: F16K 31/00, G05D 23/02, F01P 7/16, F16K 31/68

(54) **Thermostat à boîtier en matériau synthétique assemblé avec joint en L**
Thermostat mit Kunststoffgehäuse und L-förmiger Dichtung
Thermostat with plastic housing and L-shaped sealing

(30) Priorité: 30.05.1997 FR 9706697
(43) Date de publication de la demande: 02.12.1998
(73) Titulaire: VERNET S.A., 91291 Arpajon Cédex (FR)
(72) Inventeur: Bouloy, Alain Bernard Armand, 91580 Etrechy (FR); Chamot, Jean, 91290 Arpajon (FR)
(74) Mandataire: Jacobson, Claude

(56) Documents cités:
- DE-A- 1 675 492
- DE-A- 2 503 946
- DE-U- 7 235 849
- US-A- 4 763 834

## Description

L'invention concerne des thermostats destinés à équiper des circuits de fluide, notamment de fluide de refroidissement de moteur, thermostats du type comportant un élément thermostatique logé dans une enveloppe munie d'une collerette périphérique, un boîtier contenant l'élément thermostatique dans son enveloppe, en au moins deux parties entre lesquelles est insérée la collerette, et un joint d'étanchéité en contact avec la collerette et chacune des deux parties du boîtier.

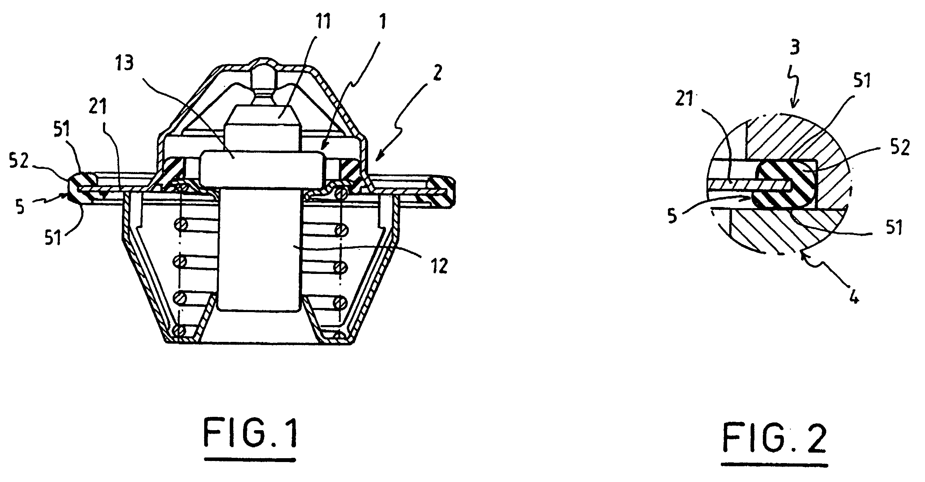

On connaît de tels thermostats, dans lesquels la transversale du joint d'étanchéité présente une forme en U couché dont les branches latérales génèrent deux couronnes circulaires parallèles et dont la base génère un anneau cylindrique reliant extérieurement les deux couronnes circulaires. Les figures 1 et 2 montrent alors le montage du joint autour de l'enveloppe et dans le boîtier.

Comme on le voit sur ces figures, la collerette de l'enveloppe est insérée entre les deux couronnes circulaires parallèles du joint, et son chant périphérique est disposé en vis-à-vis de la face interne de l'anneau cylindrique du joint. Le joint est comprimé entre les deux parties du boîtier, lesquelles sont en appui respectivement contre la face externe des couronnes et éventuellement contre celle de l'anneau cylindrique. Le joint est en matériau déformable élastiquement, par exemple en caoutchouc naturel ou synthétique.

En dehors de sa fonction d'étanchéité, le joint doit assurer une fonction de rattrapage des tolérances dimensionnelles de fabrication des pièces, et des déformations de celles-ci dues aux contraintes qu'elles subissent et à leur vieillissement.

Cette fonction était relativement bien assurée tant que les boîtiers ont été réalisés en métal ou en alliage métallique, compte-tenu de la précision de leurs cotes et de leurs propriétés mécaniques.

En revanche, la fabrication moins précise des boîtiers en matériau synthétique, et leur moindre résistance aux déformations à l'effort et dans le temps, nécessitent des joints sensiblement plus hauts que les joints à profil en U couché connus.

De plus, comme les branches du U, afin d'assurer une bonne étanchéité et un maintien en place sûr, doivent être au repos plus rapprochées dans la région de leur extrémité libre, la fabrication de tels joints est difficile et les régions en contre-dépouille risquent de subir un arrachement lors du démoulage.

L'invention a pour but de remédier à ces inconvénients, et également de créer un thermostat muni d'un joint permettant le pré-montage de l'élément thermostatique logé dans son enveloppe, dans son boîtier ou au moins dans une partie de celui-ci, afin de faciliter son montage sur chaîne ou sa livraison à titre de pièce de rechange.

A cet effet, l'invention concerne un thermostat du type comportant un élément thermostatique logé dans une enveloppe munie d'une collerette périphérique, un boîtier contenant l'élément thermostatique dans son enveloppe et constitué en au moins deux parties entre lesquelles est insérée la collerette, et un joint d'étanchéité en contact avec la collerette et chacune desdites deux parties du boîtier, thermostat caractérisé en ce que la section transversale du joint présente une forme générale en L dont les branches sont coudées approximativement à angle droit et génèrent respectivement une couronne approximativement circulaire et un anneau approximativement cylindrique de hauteur suffisante pour accepter les irrégularités des boîtiers notamment ceux en matériau synthétique, la couronne étant interposée entre une face de la collerette et l'une desdites parties du boîtier, et l'anneau étant en regard d'un chant de la collerette et en contact avec l'autre desdites parties du boîtier.

Selon des caractéristiques optionnelles de l'invention :
- l'une des parties du boîtier comporte une rainure dans laquelle est positionné l'anneau approximativement cylindrique,
- la paroi extérieure de l'anneau approximativement cylindrique porte des nervures longitudinales pouvant être disposées par groupes répartis le long du pourtour du joint pour le maintien de l'enveloppe contenant l'élément thermostatique dans une partie du boîtier,
- ou encore la paroi extérieure de l'anneau approximativement cylindrique porte des régions en saillies s'étendant circonférentiellement et réparties le long du pourtour du joint de préférence à proximité de l'extrémité libre de l'anneau approximativement cylindrique, et l'une des parties du boîtier comporte une rainure présentant des régions en saillies vers l'intérieur, dans laquelle est positionné l'anneau approximativement cylindrique.
- particulièrement dans ce dernier cas, il est utile que la couronne approximativement circulaire présente un trou central muni de plats,
- le joint est en matériau déformable élastiquement.

D'autres caractéristiques et avantages de l'invention ressortiront de la description qui va suivre et des dessins joints dans lesquels :
- la figure 1 est une vue en coupe d'un thermostat connu dont le boîtier n'est pas représenté,
- la figure 2 est une vue très agrandie d'un détail du montage du dispositif de la figure 1 dans son boîtier,
- la figure 3 est une vue en coupe d'une forme de réalisation d'un thermostat selon l'invention sans son demi-boîtier inférieur,
- la figure 4 est une vue en coupe du thermostat de la figure 3 montrant le montage des deux demi-boîtiers, sur laquelle seule la partie supérieure du demi-boîtier inférieur est représentée,
- la figure 5 est une vue de dessus d'un joint équipant un thermostat selon l'invention,
- la figure 6 est une vue très agrandie d'un détail de la figure 4,
- la figure 7 est une vue très agrandie, correspondant à celle de la figure 6, pour une variante de réalisation du demi-boîtier supérieur et du joint,
- la figure 8 montre en demi-vue de dessous, la variante de réalisation de la figure 7, lors du montage dans le demi-boîtier supérieur, et
- la figure 9 montre en demi-vue de dessous, la variante de la figure 7, lorsque le montage dans le demi-boîtier supérieur a été effectué.

Le dispositif représenté sur la figure 1 comporte un élément thermostatique 1 logé dans une cage ou enveloppe métallique 2 ; ; cet élément thermostatique présente une forme générale de révolution allongée autour d'un axe central, et il comporte d'un côté une partie fixe 11 dont l'extrémité libre est en appui contre l'enveloppe et de l'autre côté une partie mobile 12 dont l'extrémité libre est montée coulissante dans un orifice circulaire de l'extrémité opposée de l'enveloppe à travers lequel elle est plus ou moins saillante en fonction de la température du milieu dans lequel se trouve le dispositif ; l'enveloppe 2 comporte une région agencée sous la forme d'un siège adapté pour recevoir un obturateur entourant une région de la partie mobile de l'élément thermostatique et en appui contre une collerette 13 sous la poussée d'un ressort hélicoïdal comprimé entre la région de l'enveloppe entourant l'orifice dans lequel coulisse la partie mobile 12 et l'obturateur pour rappeler celui-ci vers le siège.

L'enveloppe 2 comporte elle-même également une collerette périphérique 21 en forme de couronne circulaire, destinée à être pincée entre une partie de boîtier ou demi-boîtier supérieur 3 sur les figures et une partie de boîtier ou demi-boîtier inférieur 4 sur les figures, contenant l'élément thermostatique dans son enveloppe. En vue d'assurer l'étanchéité et le rattrapage des tolérances dimensionnelles de fabrication, et des déformations, le pincement de la collerette 21 entre les deux demi-boîtiers est comme on l'a vu réalisé par l'intermédiaire d'un joint 5 déformable élastiquement.

De manière connue, la section transversale de ce joint 5 présente une forme en U couché dont les branches latérales génèrent deux couronnes circulaires 51 parallèles et dont la base génère un anneau cylindrique 52 reliant extérieurement les deux couronnes circulaires.

Selon l'invention, le joint 5 à section transversale en U couché connu, visible sur les figures 1 et 2, est remplacé par un joint 6 dont la section transversale présente une forme générale en L dont les branches sont coudées approximativement à angle droit et génèrent respectivement une couronne 61 approximativement circulaire et un anneau 62 approximativement cylindrique ; la couronne est alors interposée entre le demi-boîtier inférieur 4 et la face de la collerette 21 de l'enveloppe 2 qui est en vis-à-vis, et l'anneau est en contact ou à proximité immédiate du chant extérieur de la collerette et en contact avec le demi-boîtier supérieur 5.

La face 41 du demi-boîtier inférieur 4 qui est en vis-à-vis de la collerette 21 et du demi-boîtier supérieur 3 et qui s'étend autour d'un logement 42 pour l'élément thermostatique 1 entouré de son enveloppe 2, peut être plane.

En revanche, la face 31 du demi-boîtier supérieur 3 qui est en vis-à-vis de la collerette et du demi-boîtier inférieur et qui s'étend autour d'un logement 32 pour l'élément thermostatique entouré de son enveloppe présente un relief approprié.

Plus précisément, cette face 31 du demi-boîtier supérieur 3 présente, pour la réception de l'anneau cylindrique 62, une rainure s'étendant circonférentiellement ; les diamètres intérieur et extérieur de cette rainure peuvent être respectivement approximativement égaux aux diamètres correspondants de l'anneau cylindrique. La région de la face 31 du demi-boîtier supérieur 3 qui est voisine du contour extérieur de la rainure est en surplomb par rapport au fond de celle-ci, d'une hauteur comprise entre celle du joint 6 et celle de ce joint diminuée de l'épaisseur de la couronne 61, tandis que la région qui est voisine du contour intérieur de la rainure, est en surplomb d'une hauteur inférieure à celle du joint diminuée de l'épaisseur de la couronne 61 et de celle de la collerette 21 mais en retrait par rapport à la précédente d'une hauteur inférieure à la somme de l'épaisseur de la collerette et de celle de la couronne du joint ; ainsi, lorsque les demi-boîtiers 3, 4 sont rapprochés, le demi-boîtier inférieur 4 pousse, par l'intermédiaire de la couronne 61, la collerette 21 contre le demi-boîtier supérieur, en déformant le joint, éventuellement jusqu'à ce que les faces 31, 41 en regard, des deux demi-boîtiers 3, 4, arrivent en butée ; ainsi l'étanchéité en directions radiale et axiale et la compensation dimensionnelle notamment en direction axiale sont assurés ; entre la région de compression du boîtier supérieur 3, et le logement 32 pour l'élément thermostatique 1 dans son enveloppe 2, peut s'étendre une région encore plus en retrait laissant à l'enveloppe une certaine liberté de déformation, ce qui évite tout coincement et facilite un éventuel démontage.

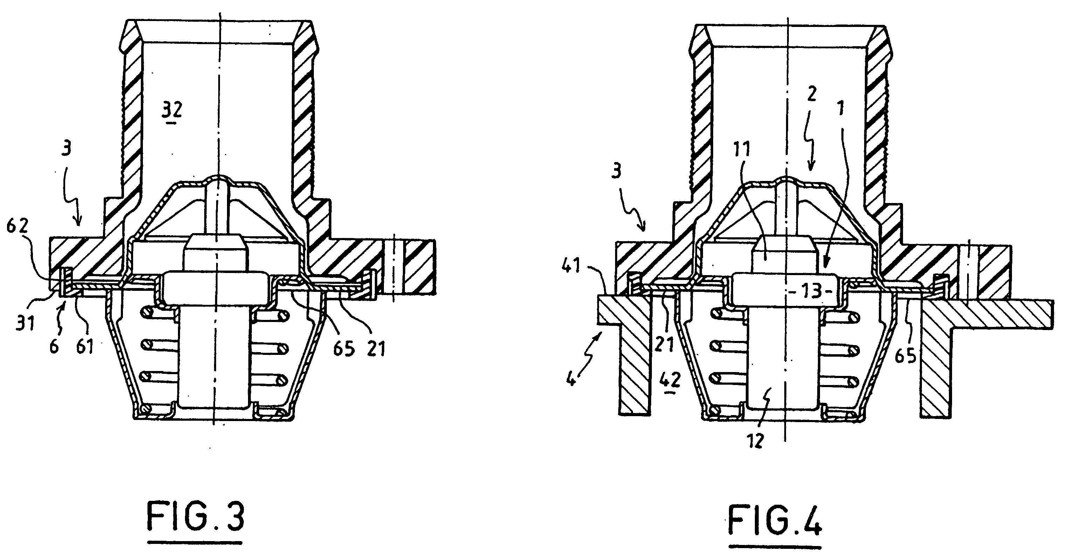

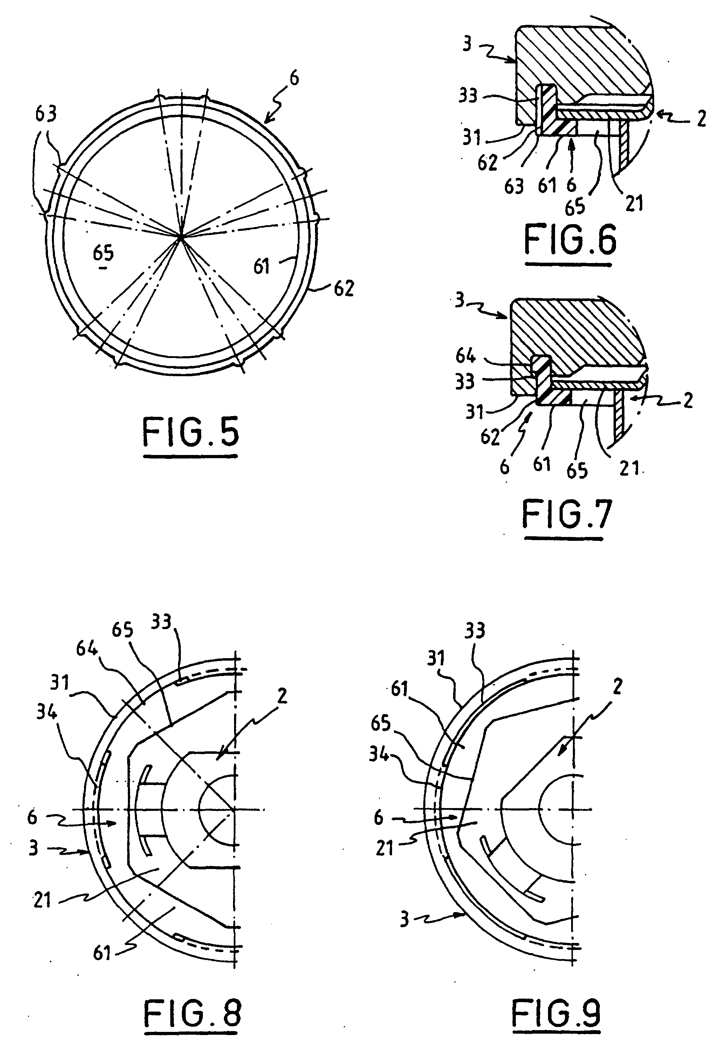

Avantageusement, comme représenté sur les figures 3 à 6, pour permettre le pré-montage du joint 6 en L dans le demi-boîtier supérieur 3, par exemple afin de faciliter le montage du thermostat sur chaîne, ou sa livraison à titre de pièce de rechange, la paroi extérieure de l'anneau 62 approximativement cylindrique porte, sur tout ou partie de sa hauteur, des nervures 63 longitudinales s'étendant radialement sur une fraction de millimètre, par exemple un demi-milli-mètre ; ces nervures 63 présentent par exemple une section transversale arrondie ; ; dans ce cas, le diamètre extérieur de la rainure 33 du demi-boîtier supérieur est supérieur au diamètre extérieur de l'anneau cylindrique 62 mais la largeur de la rainure est inférieure à celle de cet anneau nervure comprise ; ainsi, lorsque l'anneau est inséré dans la rainure, il ne peut plus s'en libérer spontanément, par exemple par gravité. Il est également possible de prévoir, en l'absence de nervures 63, que les diamètres de l'anneau cylindrique et de la rainure soient choisis tels que l'anneau soit légèrement déformé lors de son insertion dans la rainure 33, mais cette solution est moins satisfaisante. Dans la forme de réalisation représentée sur la figure 5, le joint comporte cinq groupes de deux nervures 63 distantes l'une de l'autre de 20 degrés environ, les groupes étant répartis régulièrement le long du pourtour du joint ; l'anneau cylindrique 62 comporte, à son extrémité libre (à l'opposé de la couronne circulaire), extérieurement, une région arrondie, et intérieurement, un chanfrein, facilitant l'introduction de l'anneau dans la rainure 33 du demi-boîtier supérieur.

Sur la variante des figures 7, 8 et 9, la face 31 du demi-boîtier supérieur 3 en regard du demi-boîtier inférieur 4 comporte également une rainure 33, et la différence principale entre cette variante et la forme de réalisation précédemment décrite réside dans le profil du contour extérieur de cette rainure 33 et celui du contour extérieur de l'anneau cylindrique 62 du joint 6 en L.

En effet, dans cette forme de réalisation, pour éviter la libération spontanée du joint 6 lorsqu'il est inséré dans la rainure 33, le joint et la rainure présentent un profil permettant un montage du type à baïonnette.

A cette fin, la paroi extérieure de l'anneau cylindrique 62 du joint 6 en L ne présente plus de nervures longitudinales, mais des régions en saillies 64, nervures, bourrelets . ou analogues, s'étendant circonférentiellement, situées à proximité de l'extrémité libre de l'anneau 62 ; ces régions 64, réparties régulièrement le long du pourtour du joint 6, sont ici au nombre de quatre et s'étendent chacune sur un arc d'une quarantaine de degrés. Alors, la rainure 33 présente un diamètre extérieur légèrement supérieur à celui de l'anneau cylindrique 62, sauf dans des régions 34 de sa paroi extérieure, qui sont en saillies vers l'intérieur (nervures, bourrelets ou analogues), où ces saillies réduisent la largeur de la rainure 33 à une dimension à peine supérieure à l'épaisseur de l'anneau cylindrique 62 saillie non comprise ; ici, ces saillies 34 du demi-boîtier supérieur sont au nombre de quatre, régulièrement réparties le long de la rainure, et s'étendent chacune sur un arc d'une quarantaine de degrés ; la distance qui les sépare du fond de la rainure 33 est légèrement supérieure à la hauteur des saillies 64 de l'anneau cylindrique.

Ainsi, pour le montage du joint 6 déjà assemblé à l'enveloppe 2 de l'élément thermostatique 1, il suffit de disposer les saillies 64 de celui-ci en face des espaces qui séparent deux saillies 34 voisines du demi-boîtier supérieur (figure 8), d'amener le joint en butée dans le fond des rainures 33 et de tourner les pièces mutuellement de telle sorte que les saillies 34 du demi-boîtier 3 s'opposent au retrait du joint (figure 9). Afin de faciliter l'actionnement en rotation du joint, celui-ci peut posséder, comme sur les figures 8 et 9, une couronne 61 qui n'est réellement circulaire que sur son pourtour extérieur, son trou central 65 présentant une forme générale conjuguée à celle d'un outil d'actionnement en rotation ou des "plats" pour l'appui d'un tel outil, par exemple une forme générale hexagonale.

Le joint 6 peut présenter un anneau cylindrique aussi haut que désiré et la forme en L permet alors d'assurer l'étanchéité entre l'intérieur et l'extérieur et entre l'amont et l'aval du thermostat, ainsi que la compensation dimensionnelle même en cas de variations de dimensions importantes, et cela en exigeant peu de matière première. A titre indicatif, le joint, en matériau déformable élastiquement, par exemple un élastomère synthétique ou naturel, présente une hauteur totale de l'ordre de 4 ou 5 millimètres ou davantage si nécessaire, pour un diamètre extérieur de l'ordre d'une cinquantaine de millimètres, sans problème particulier.

Le montage du thermostat, simple et rapide, est effectué en montant tout d'abord l'élément thermostatique 1 dans son enveloppe 2 avec toutes les pièces que doit contenir celle-ci (notamment l'obturateur et le ressort), puis en enfilant le joint 6 en L autour de la collerette 21 de l'enveloppe, et ensuite en insérant l'ensemble dans le demi-boîtier supérieur 3 ; après quoi, le demi-boîtier supérieur 3 et le demi-boîtier inférieur 4 sont assemblés comme déjà mentionné, et fixés définitivement l'un à l'autre par exemple au moyen d'un boulon dont la tige traverse des trous de fixation prévus dans des oreilles respectives en regard, des deux demi-boîtiers.

## Revendications

1. Thermostat du type comportant un élément thermostatique (1) logé dans une enveloppe (2) munie d'une collerette périphérique (21), un boîtier contenant l'élément thermostatique dans son enveloppe et constitué en au moins deux parties (3, 4) entre lesquelles est insérée la collerette, et un joint d'étanchéité (6) en contact avec la collerette et chacune desdites deux parties du boîtier, thermostat **caractérisé en ce que** la section transversale du joint (6) présente une forme. générale en L dont les branches sont coudées approximativement à angle droit et génèrent respectivement une couronne (61) approximativement circulaire et un anneau (62) approximativement cylindrique de, hauteur suffisante pour accepter les irrégularités des boîtiers notamment ceux en matériau synthétique, la couronne étant interposée entre une face de la collerette (21) et l'une (4) desdites parties du boîtier, et l'anneau étant en regard d'un chant de la collerette (21) et en contact avec l'autre (3) desdites parties du boîtier.

2. Thermostat selon la revendication 1, **caractérisé en ce que** l'une (3) des parties du boîtier comporte une rainure (33) dans laquelle est positionné l'anneau (62) approximativement cylindrique.

3. Thermostat selon la revendication 1, **caractérisé en ce que** la paroi extérieure de l'anneau (62) approximativement cylindrique porte des nervures (63) longitudinales pour le maintien de l'enveloppe contenant l'élément thermostatique dans une partie du boîtier.

4. Thermostat selon la revendication 3, **caractérisé en ce que** les nervures (63) sont disposées par. groupes répartis le long du pourtour du joint.

5. Thermostat selon la revendication 1, **caractérisé en ce que** la paroi extérieure de l'anneau (62) approximativement cylindrique porte des régions en saillies (64) s'étendant circonférentiellement et réparties le long du pourtour du joint (6).

6. Thermostat selon la revendication 5, **caractérisé en ce que** les régions en saillies (64) sont à proximité de l'extrémité libre de l'anneau (62) approximativement cylindrique.

7. Thermostat selon la revendication 5, **caractérisé en ce que** l'une (3) des parties du boîtier comporte une rainure (33) présentant des régions en saillies (34) vers l'intérieur, dans laquelle est positionné l'anneau (62) approximativement cylindrique.

8. Thermostat selon la revendication 1, **caractérisé en ce que** la couronne (61) approximativement circulaire présente un trou central (65) muni de plats.

9. Thermostat selon la revendication 1, **caractérisé en ce que** le joint (6) est en matériau déformable élastiquement.

## Claims

1. Thermostat of the type comprising a thermostatic element (1) which is housed in a casing (2) equipped with a peripheral collar (21), a housing containing the thermostatic element in its casing and comprising at least two parts (3, 4) between which the collar is inserted, and a gasket (6) which is in contact with the collar and each of said two parts of the housing, the thermostat being **characterised in that** the transverse section of the gasket (6) has a general L-shape, the branches of which are welded approximately at right angles and produce respectively a ring (61) which is approximately circular and a band (62) which is approximately cylindrical of adequate height to take up the irregularities of the housings, in particular those made of synthetic material, the ring being interposed between one face of the collar (21) and the one part (4) of said parts of the housing, and the band facing a narrow edge of the collar (21) and being in contact with the other (3) of said parts of the housing.

2. Thermostat according to claim 1, **characterised in that** the one part (3) of the parts of the housing comprises a groove (33) in which there is positioned the approximately cylindrical band (62).

3. Thermostat according to claim 1, **characterised in that** the external wall of the approximately cylindrical band (62) carries longitudinal ribs (63) in order to retain the casing which contains the thermostatic element in one part of the housing.

4. Thermostat according to claim 3, **characterised in that** the ribs (63) are disposed in groups distributed along the circumference of the gasket.

5. Thermostat according to claim 1, **characterised in that** the external wall of the approximately cylindrical band (62) carries projecting regions (64) which extend circumferentially and are distributed along the circumference of the gasket (6).

6. Thermostat according to claim 5, **characterised in that** the projecting regions (64) are adjacent to the free end of the approximately cylindrical band (62).

7. Thermostat according to claim 5, **characterised in that** the one part (3) of the parts of the housing comprises a groove (33) which has regions (34) projecting towards the interior in which the approximately cylindrical band (62) is positioned.

8. Thermostat according to claim 1, **characterised in that** the approximately circular ring (61) has a central hole (65) which is equipped with flats.

9. Thermostat according to claim 1, **characterised in that** the gasket (6) is made of an elastically deformable material.

## Patentansprüche

1. Thermostat des Typs, der ein Thermostatelement (1), das in einer mit einem Umfangskragen (21) versehenen Hülle (2) untergebracht ist, ein Gehäuse, das das Thermostatelement in seiner Hülle enthält und aus wenigstens zwei Teilen (3, 4) gebildet ist, zwischen die der Kragen eingeschoben ist, und eine Dichtung (6), die mit dem Kragen und jedem der Teile des Behälters in Kontakt ist, umfaßt, wobei der Thermostat **dadurch gekennzeichnet ist, daß** der Querschnitt der Dichtung (6) eine allgemeine L-Form aufweist, deren Schenkel angenähert rechtwinklig umgebogen sind und einen angenähert kreisförmigen Kranz (61) bzw. einen angenähert zylindrischen Ring (62), dessen Höhe ausreicht, um die Unregelmäßigkeiten des Behälters, insbesondere jene aus Kunststoff, auszugleichen, erzeugen, wobei der Kranz zwischen eine Fläche des Kragens (21) und einen (4) der Teile des Behälters eingefügt ist und wobei sich der Ring gegenüber einer Kante des Kragens (21) und in Kontakt mit dem anderen (3) der Teile des Behälters befindet.

2. Thermostat nach Anspruch 1, **dadurch gekennzeichnet, daß** eines (3) der Teile des Behälters eine Rinne (33) enthält, in der der angenähert zylindrische Ring (62) angeordnet ist.

3. Thermostat nach Anspruch 1, **dadurch gekennzeichnet, daß** die Außenwand des angenähert zylindrischen Rings (62) longitudinale Rippen (63) trägt, um die Hülle, die das Thermostatelement enthält, in einem Teil des Behälters zu halten.

4. Thermostat nach Anspruch 3, **dadurch gekennzeichnet, daß** die Rippen (63) in Gruppen, die längs des Umfangs der Dichtung verteilt sind, angeordnet sind.

5. Thermostat nach Anspruch 1, **dadurch gekennzeichnet, daß** die Außenwand des angenähert zylindrischen Rings (62) vorstehende Bereiche (64) trägt, die sich in Umfangsrichtung erstrecken und um den Umfang der Dichtung (6) verteilt sind.

6. Thermostat nach Anspruch 5, **dadurch gekennzeichnet, daß** sich die vorstehenden Bereiche (64) in der Nähe des freien Endes des angenähert zylindrischen Rings (62) befinden.

7. Thermostat nach Anspruch 5, **dadurch gekennzeichnet, daß** eines (3) der Teile des Behälters eine Rinne (33) aufweist, die nach innen vorstehende Bereiche (34) aufweist und in der der angenähert zylindrische Ring (62) angeordnet ist.

8. Thermostat nach Anspruch 1, **dadurch gekennzeichnet, daß** der angenähert zylindrische Kranz (61) ein mit flachen Seiten versehenes Mittelloch (65) aufweist.

9. Thermostat nach Anspruch 1, **dadurch gekennzeichnet, daß** die Dichtung (6) aus einem elastisch verformbaren Material besteht.
